# EUROPEAN PATENT SPECIFICATION

(11) **EP 3 775 582 B1**
(45) Date of publication and mention of the grant of the patent: **15.10.2025**
(21) Application number: 19715235.8
(22) Date of filing: 28.02.2019
(51) Int. Cl.: F16B 13/12

(54) **EXPANSION ATTACHMENT DOWEL**
SPREIZDÜBEL
GOUJON À FIXATION PAR EXPANSION

(30) Priority: 09.04.2018 IT 201800004331
(43) Date of publication of application: 17.02.2021
(73) Proprietor: Friulsider S.p.A., 33048 San Giovanni Al Natisone (IT)
(72) Inventor: FRANZOSO, Michele, 33033 CODROIPO (IT)
(74) Representative: Fuchs Patentanwälte Partnerschaft mbB
(86) International application number: PCT/IT2019/050046
(87) International publication number: WO 2019/198112

(56) References cited:
- EP-A1- 0 571 360
- EP-A1- 1 275 860
- DE-A1- 1 625 283
- DE-A1- 2 947 752
- US-A- 1 120 412

## Description

### FIELD OF THE INVENTION

The present invention concerns an expansion attachment dowel, which can be used to attach, for example, a screw to a wall of any type.

The present invention can be used both on walls of considerable thickness, for example plaster, masonry, or concrete walls, and on walls of reduced thickness, such as perforated bricks with large cell sizes, cellular concrete, or suchlike.

### BACKGROUND OF THE INVENTION

Numerous proposals are known, both purely in literature, and possibly protected by patent rights, and also marketed in practice, which have progressively been developed to obtain an ever better grip in the hole in which the dowel is inserted or made to cooperate with a suitable screw which determines its final gripping expansion.

Known attachment dowels normally consist of a cylindrical body made of plastic material, longitudinally hollow and into which the screw is inserted. The cylindrical body generally has a corrugated external surface which, during use, at least partly interferes with the internal walls of the hole in which it is inserted. The cylindrical body is normally provided with one or more longitudinal notches that define a plurality of expandable elements.

Examples of these attachment dowels are described in documents DE 16 25 283 A1, DE 29 47 752 A1, EP 1 275 860 A1, EP 0 571 360 A1 and US 1 120 412 A.

The expandable elements, as a result of the screwing of the screw, expand radially to anchor, during use, in the installation hole made in the wall.

It is known that in many cases it is necessary for the dowel to be able to generate a provisional anchorage, even without the screw.

It is also known that in certain even marginally loose materials, the expanding action exerted by the screw is such as to give a good guarantee of grip.

It is also known that a dowel must sometimes be applied in walls (perforated bricks, cellular concrete, or suchlike) which have spaces, and must in any case guarantee not only a radial but possibly also an axial anchorage, so that it does not rotate and does not move axially.

In other words, currently a dowel must be usable on any type of material to support household objects (furniture, televisions, or suchlike), false ceilings, fixtures, but also supports, tools, small devices, or suchlike.

Some proposals have been made, but all have more or less extensive limits.

Document US-A-4.142.440, in order to improve the provisional anchorage, provides a dowel with two fins which, in proximity to the terminal part, extend autonomously from the dowel. The dowel also comprises two or more fixed extensions in the terminal part.

Document DE-C-3.208.347 describes a dowel provided with other free fins in the front part and a fretted longitudinal sectioning.

The dowel described in document EP-A-0.964.169, suitable for plasterboard walls, provides elements extending radially due to the action of the screw introduced. These elements, in the free spaces between the panels, exert an axial block with the screw inserted.

The dowel described in US-A-2002/076297 provides elastic longitudinal extensions which extend outside the nominal diameter of the dowel. Upon insertion, the extensions retract, creating a temporary radial block that becomes definitive with the introduction of the screw.

Document US-A-2002/176761 provides a dowel that has longitudinally three zones or segments. A front zone has triangular shaped tongues which cooperate with two longitudinal slots. A central zone has S-shaped tongues that extend inside, and finally a rear zone has lateral extensions. This type of dowel is particularly suitable for thin walls or for plasterboard.

Document US-A-2009/092459 provides a dowel with a substantially cylindrical or slightly conical part which continues with four circumferential zones, in pairs, equal and opposite. One zone has longitudinal hollows, the other zone has a portion located radially inside and in which there are V-shaped elements.

Document US-A-2015/0260213 has, in its length, two differently specialized zones, as well as having externally a retaining ring that cooperates with some longitudinal extensions.

In the first zone, the dowel is in fact cylindrical, and in the zone connecting with the second zone it has one or more radial extensions which continue for a large part of the second zone.

At the sides of the radial extensions there are circumferential hollows, while in the intermediate zones there are successive incisions cooperating in a shield-like manner, which are connected to the cylindrical body by frangible portions.

When the screw is introduced, the frangible portions break and each shield-type portion expands, moving away from the neighboring shield-type portions.

One disadvantage of the expansion attachment dowels known in the state of the art is that they offer only moderate resistance to extraction from the hole following installation.

There is therefore a need to produce an expansion attachment dowel which overcomes the limitations of the state of the art.

One purpose of the present invention is to produce an expansion attachment dowel which guarantees stable and secure attachment over time of the threaded means.

Another purpose of the present invention is to produce an expansion attachment dowel which guarantees axial attachment in the hole.

Another purpose of the present invention is to produce an expansion attachment dowel which is simple and economical to make.

Another purpose is to produce an attachment dowel which allows threaded means to be attached to a wall opposing a high resistance to extraction from the hole following installation.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, an expansion attachment dowel comprises an anchoring body with a substantially cylindrical shape and provided with an axial cavity that develops along a longitudinal axis, as defined by claim 1.

The anchoring body comprises a plurality of attachment elements radially expandable toward the outside of the anchoring body and defined by a corresponding plurality of notches through toward the axial cavity.

During use, the dowel is inserted in an installation hole, and a screw is screwed into the axial cavity. The action of the screw deforms the expandable elements, making them expand radially and pressing them against the walls of the installation hole.

According to the present invention, at least some of the notches have a substantially Y-shaped profile.

According to the present invention the substantially Y-shaped profile of at least some of the notches comprises a shank and two converging arms on a first end of the shank, wherein the shank is substantially parallel to the longitudinal axis.

According to the present invention, the particular conformation of the notches advantageously allows to make expandable elements with a reduced volume, which therefore can expand radially with respect to the cylindrical body easily and without breaking.

The particular conformation of the notches also allows to maximize the expansion of the expandable elements with respect to the diameter of the dowel, allowing a secure and stable axial attachment.

In particular, the radial expansion requires great force to extract the dowel axially from the hole following expansion.

According to possible embodiments, the arms of the Y-shape advantageously converge to define a V-shape defining a point directed along the longitudinal axis, in the insertion direction of the dowel in a wall during use. By doing so, the arms of the Y-shape define a point of the expandable element which, during use, goes into contact with the walls of the installation hole.

According to possible embodiments, the arms of the Y-shape of the notches each also have a segment substantially parallel to the longitudinal axis, in a position opposite the first end. In this way, the notches allow to further reduce the volume of the expandable elements.

According to possible embodiments, one or more of the expandable elements are provided with radial ridges, in particular developing parallel to the longitudinal axis, so as to improve the contact of the expandable element with the wall of the installation hole.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

The various aspects and characteristics described in the present description can be applied individually where possible. These individual aspects, for example aspects and characteristics described in the attached dependent claims, can be the purpose of divisional applications.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of an attachment dowel according to the present invention;
- fig. 2 is a lateral view of the attachment dowel of fig. 1 from a first angle;
- fig. 3 is a section view along the section line III-III of fig. 2;
- fig. 4 is a lateral view of the attachment dowel of fig. 1 from a second angle;
- fig. 5 is a section view along the section line V-V of fig. 4;
- figs. 6 and 7 are enlargements of section views along section lines VI-VI and VII-VII of fig. 4, respectively;
- fig. 8 is a partial section view of the attachment dowel of fig. 1 in a first condition of use;
- fig. 9 is a partial section view of the attachment dowel of fig. 1 in a second condition of use.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants, as long as they fall under the scope of the appended claims.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

The attached drawings are used to describe embodiments of an expansion attachment dowel 10, or hereafter simply dowel or expansion dowel 10, for example suitable to be inserted, during use, in a corresponding installation hole 12 made, for example, in a wall 13 made, for example, of masonry, concrete, or other types of materials.

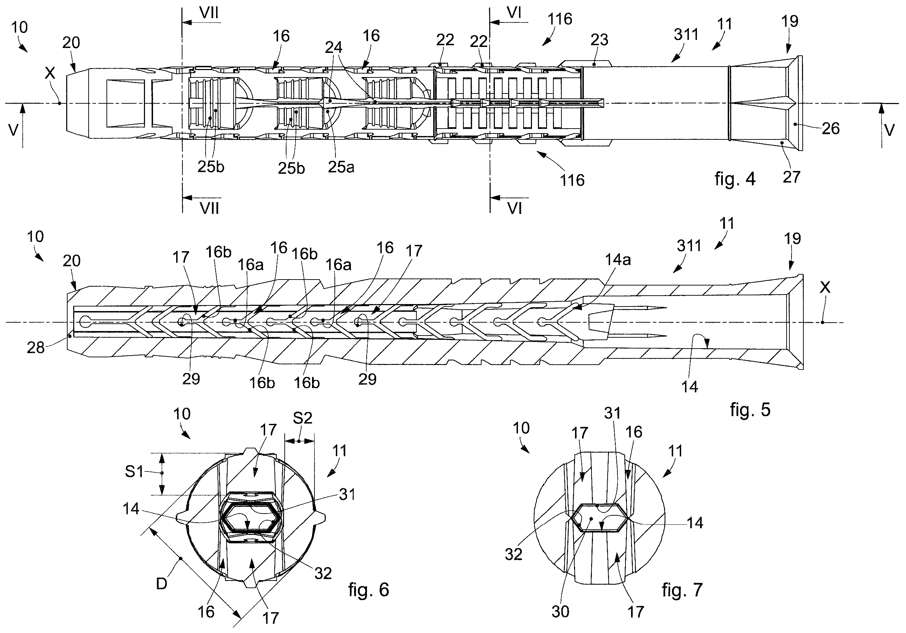

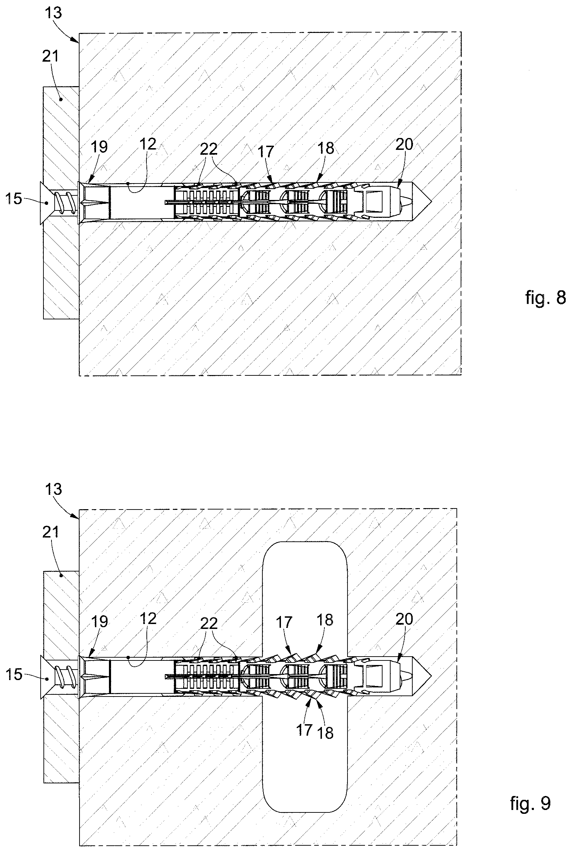

In some embodiments, the dowel 10 comprises an anchoring body 11 which is provided with an axial cavity 14 (figs. 5-7) that develops along a longitudinal axis X. In the axial cavity 14, during use, a threaded means 15, hereafter for simplicity also defined as screw 15, can be inserted, provided with a threaded portion. With reference to figs. 8-9, a screw is shown schematically illustrating a possible threaded mean 15.

The combination of the attachment dowel 10 and of the screw 15 can be used to attach a component 21 (figs 8-9) to the wall 13, such as a structure, a door or window frame, a furnishing element, a panel or suchlike. However, it is not excluded that possible embodiments of the present invention can be used to attach supports, tools or small devices.

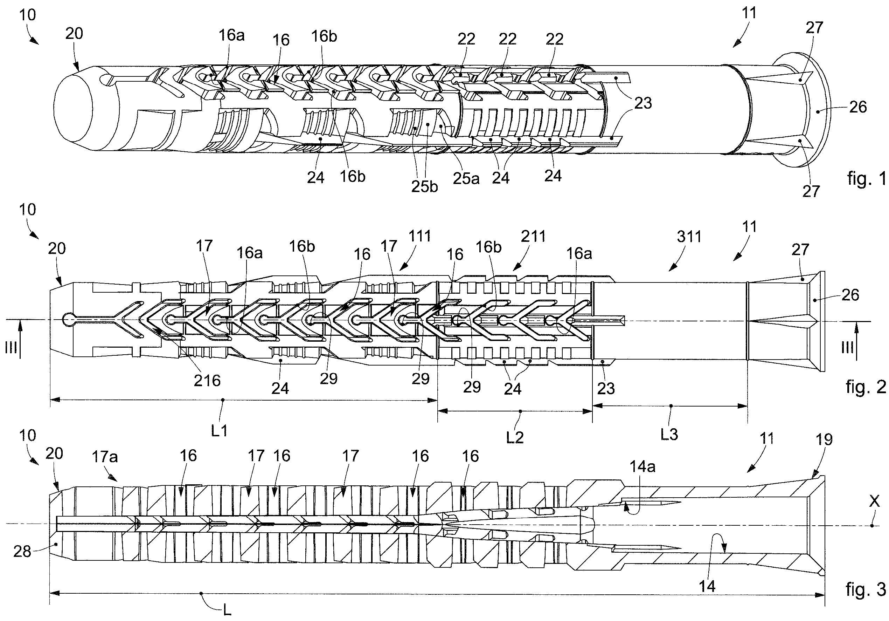

According to possible embodiments, the anchoring body 11 has a mean diameter D (see fig. 6) and an overall length L (see fig. 3). The anchoring body 11 develops between a first end 19 and a second end 20, along the longitudinal axis X.

According to possible embodiments, the anchoring body 11 has a substantially cylindrical shape, whereby substantially cylindrical includes both the possibility of a cylindrical shape, as well as the possibility that the anchoring body 11 has a slight taper, for example comprised between 1° and 3°, between the first end 19 and the second end 20 of the anchoring body 11.

According to possible embodiments, the anchoring body 11 can be made, for example, by injection molding of plastic material.

According to possible embodiments, shown by way of example in fig. 3, the axial cavity 14 has a cross section that narrows between the first end 19 of the anchoring body 11, in correspondence with which, during use, a threaded mean 15 can be inserted into the tubular cavity 14, and the second end 20, opposite the first end 19 of the anchoring body 11.

According to possible embodiments, shown by way of example in figs. 3 and 5, the axial cavity 14 can be blind and the second end 20 of the anchoring body 11 can be provided with a bridge 28 with a flat bottom, configured to perform the function of controlling the tightening force of the screw 15 which is inserted into the axial cavity 14. According to possible embodiments, the bridge 28 can be frangible, that is, it can be perforated by the screw 15 during screwing, as shown merely by way of example in figs. 8 and 9.

According to another aspect of the present invention, the anchoring body 11 is provided with a plurality of notches 16 made in the anchoring body 11 through toward the axial cavity 14 to define a plurality of expandable elements 17.

The expandable elements 17, due to the screwing of the screw 15, expand radially with respect to the longitudinal axis X, anchoring in the installation hole 12 in which the anchoring body 11 is inserted.

According to one aspect of the present invention, at least some of the notches 16 have a substantially Y-shaped profile.

The particular substantially Y-shaped conformation of the profile of the notches 16 allows to obtain shield-type expandable elements 17. The shield shape can be, in particular, defined by two consecutive converging sides or segments. The shield shape, even more particularly, can be defined by two broken half-lines, that is, formed by two rectilinear segments, opposite and parallel to the longitudinal axis X, and two segments converging toward the longitudinal axis X to define a pointed conformation. The expandable elements 17, with the screwing of the screw 15, move away from the axial cavity 14, expanding radially toward the outside for the purpose of gripping.

In particular, the substantially Y-shaped profile of the notches 16 comprises a shank 16a and two converging arms 16b on a first end of the shank 16a, wherein said shank 16a is substantially parallel to the longitudinal axis X, advantageously so as to reduce the volume of the expandable elements 17. In fact, the two converging arms 16b of the Y-shaped profile of one notch 16 define the two converging broken half-lines of the shield-type shape, which expand radially, of a respective expandable element 17.

According to the invention, each of the substantially Y-shaped profiles of the notches 16 is disposed in succession with respect to a corresponding profile of a notch 16, one downstream and one upstream along the longitudinal axis X, so that one shank 16a of a first notch 16 upstream, along the longitudinal axis X and with respect to an insertion direction of the dowel 10 in a wall 13 during use, is oriented toward a point of convergence of respective converging arms 16b of a second notch 16 disposed downstream.

According to possible embodiments, the arms 16b of the Y-shaped profile converge to define a V-shape defining a point 18 directed along the longitudinal axis X, in the insertion direction of said dowel in a wall 13 during use.

The points 18 of the expandable elements 17, during use, advantageously come into contact with the walls of the installation hole 12.

Applicant has found, in particular, that a notch which simply has a V-shape would not per se allow a correct expansion of the expandable element 17 with respect to the diameter D.

On the other hand, the particular substantially Y-shaped conformation of the profile of the notches 16 advantageously allows to make expandable elements 17 which can expand considerably with respect to the mean diameter D of the anchoring body 11 without breaking or being subject to cracks.

For example, according to possible embodiments, the points 18 of the expandable elements 17 can advantageously expand radially up to even 50% of the diameter D of the dowel 10.

Furthermore, advantageously the expansion attachment dowel 10 according to the present invention allows to withstand strong extraction forces from the installation hole 12, for example comprised between 15 kN and 20 kN, much stronger than the forces required to extract attachment dowels known in the state of the art.

According to possible embodiments, the arms 16b of the substantially Y-shaped profile of the notches 16 each also have a segment substantially parallel to the longitudinal axis X, in a position opposite the first end 19.

In this way, advantageously, the notches 16 allow to further reduce the volume of the expandable elements 17.

According to possible embodiments, each of the notches 16 is defined by a separate and non-communicating profile with respect to the profiles that define the other notches 16.

According to possible embodiments, shown solely by way of example in fig. 4, the dowel 10 can comprise at least two linear sequences 116 of notches 16 which develop linearly, one in a position diametrically opposite the other, in a direction parallel to the longitudinal axis X.

According to possible embodiments, shown for example in figs. 1 and 2, in correspondence with a second end, opposite the first end, the shank 16a has a widened terminal portion, in particular a circular hole 29.

In possible embodiments, the anchoring body 11 is provided with one or more successive cylindrical portions 111, 211 provided with the notches 16, which can have lengths L1, L2. For example, two cylindrical portions 111 and 211 can be provided, provided with the notches 16, having lengths L1 and L2 respectively.

Advantageously, therefore, according to possible embodiments, the dowel 10 can be suitable for a double installation, that is, it can be inserted in the hole 12 by a first length L1, therefore completely inserting the cylindrical portion 111 provided with notches 16, in which the first end 19 of the anchoring body 11 protrudes from the hole 12, or it can be inserted by a second length L2, greater than L1, therefore completely inserting both the cylindrical portions 111 and 211 provided with notches 16, in which the first end 19 of the anchoring body 11 is in correspondence with the hole 12.

For example, a dowel 10 with a mean diameter D equal to 8 mm can be installed both in a first installation, in which L1 is equal to 40 mm, and in a second installation in which L2 is equal to 50 mm.

Furthermore, a dowel 10 with a mean diameter D can be installed both in a first installation, in which L1 is equal to 50 mm, and in a second installation in which L2 is equal to 70 mm.

According to possible embodiments, the notches 16 can be provided for the entire extension of the anchoring body 11.

Alternatively, the anchoring body 11 can be provided with a cylindrical portion 311 without notches 16, which can have a length L3. The length L3 of the cylindrical portion 311 can advantageously vary according to specific applications of the expansion attachment dowel 10.

The cylindrical portion 311 can advantageously be used to adjust the depth in the installation hole 12 at which the expansion of the expandable elements 17 is required.

Embodiments of the present invention can provide that one or more of the expandable elements 17 are provided with a plurality of radial ridges 22, in particular developing parallel to the longitudinal axis X.

The radial ridges 22 advantageously allow to increase, during use, the condition of interference between the expandable elements 17 and the walls of the installation hole 12 (see figs. 8-9).

According to possible embodiments, shown by way of example in figs. 1 and 2, each of the radial ridges 22 extends completely between two successive notches 16, in particular from one shank 16a of a first notch 16 upstream, along the longitudinal axis X and with respect to an insertion direction of the dowel in a wall during use, toward a point of convergence of respective converging arms 16b of a second notch 16 disposed downstream.

According to possible embodiments, the expandable elements 17 provided with radial ridges 22 can be the expandable elements 17 characteristic of the second cylindrical portion 211. In this way, the expandable elements 17 of the second cylindrical portion 211, even if they are expanded at a later time and/or to a lesser extent compared to the expandable elements 17 of the first cylindrical portion 111, still guarantee the gripping to the walls of the installation hole 12.

According to possible embodiments, the anchoring body 11 can comprise other radial extensions 23, aligned with the radial ridges 22.

In the case shown by way of example in fig. 8, the expandable elements 17 come into contact with the walls of the installation hole 12, generating the gripping.

In the case of a perforated brick, shown by way of example in fig. 9, the expandable elements 17 in correspondence with the second end 20 expand, coming into contact with the walls of the installation hole 12. In correspondence with a central zone of the attachment dowel 10, on the contrary, the expandable elements 17 are not held by the walls of the installation hole 12 and are free to expand radially.

According to possible embodiments, the cross section of the axial cavity 14 narrows at least passing from the cylindrical portion 311 without notches 16 to the cylindrical portion 111, 211 provided with notches 16.

According to possible embodiments, shown by way of example in figs. 3 and 5, the axial cavity 14 can have a lead-in connection 14a in the passage from the cylindrical portion 311 without notches 16 to the cylindrical portion 111, 211 provided with notches 16.

According to possible embodiments, shown by way of example in figs. 6 and 7, along said cylindrical portion 211 the axial cavity 14 has a hexagonal cross section 30 with a shape elongated transversely with respect to the direction of longitudinal development of the notches 16, having a pair of long sides 31, parallel and opposite, each with a length greater than the length of the sides of the respective pairs of converging sides 32 of the hexagon.

According to possible embodiments, at least one of the long sides 31 is disposed facing the zone where the attachment elements 17 defined by the notches 16 are provided.

According to possible embodiments, the expandable elements 17 can be provided with a thickness S1 bigger than a mean thickness S2 of the anchoring body 11, so as to define a raised step profile 17a substantially aligned parallel to the longitudinal axis X.

In this way, advantageously, the expandable elements 17 are thicker, so as to improve the grip on the walls of the installation hole 12, while the anchoring body 11 has a reduced thickness to allow the expansion of the expandable elements 17.

According to possible embodiments, for example shown in figs. 1, 2 and 4, the anchoring body 11 can be provided with a plurality of radial extensions 24, with a development substantially parallel to the longitudinal axis X and opposite each other with respect to the sides of the notches 16.

The radial extensions 24 are advantageously configured to prevent the rotation of the attachment dowel 10 in the installation hole 12 when the screw 15 is screwed in.

According to possible embodiments, the radial extensions 24 can be configured to guide the installation of the dowel 10 in the hole 12.

According to possible embodiments, the radial extensions 24 can have a differentiated shape and/or development to identify the end of the first cylindrical portion 111 and/or of the second cylindrical portion 211.

According to possible embodiments, shown by way of example in fig. 2, the dowel 10 can also comprise at least one other V-shaped notch 216.

According to possible embodiments, not shown, the dowel 10 can comprise at least one possible rectilinear terminal notch, possibly provided with a widened portion, in particular in the form of a circular hole.

According to possible embodiments, the anchoring body 11 can also comprise sequential hollows, transplanar 25a and linear 25b, located circumferentially on the two sides of the radial extensions 24 and affecting a segment of the anchoring body 11.

According to possible embodiments, the first end 19 of the anchoring body 11 can be provided with an abutment collar 26, substantially annular in shape (see fig. 1). When the dowel 10 is installed, the abutment collar 26 is made to abut against the wall 13 and/or the component 21 and therefore prevents the attachment dowel 10 from completely and involuntarily retracting into the installation hole 12, making the installation of the screw 15 difficult.

According to possible embodiments, the abutment collar 26 can be provided with one or more ridges 27 to improve the axial positioning in the hole 12 and generate a first torsional grip.

It is clear that modifications and/or additions of parts may be made to the expansion attachment dowel as described heretofore, without departing from the field and scope of the present invention.

It is also clear that, although the present invention has been described with reference to some specific examples, a person of skill in the art shall certainly be able to achieve many other equivalent forms of expansion attachment dowel, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Expansion attachment dowel comprising an anchoring body (11) with a substantially cylindrical shape and provided with an axial cavity (14) that develops along a longitudinal axis (X), said anchoring body (11) comprising a plurality of attachment elements (17) radially expandable toward the outside of said anchoring body (11) and defined by a corresponding plurality of notches (16) through toward said axial cavity (14), wherein at least some of said notches (16) have a substantially Y-shaped profile, in which said substantially Y-shape comprises a shank (16a) and two converging arms (16b) on a first end of said shank (16a), wherein said shank (16a) is substantially parallel to said longitudinal axis (X), **characterized in that** each of the substantially Y-shaped profiles of said notches (16) is disposed in sequence with respect to a corresponding profile of a notch (16) downstream and one upstream along said longitudinal axis (X), so that one shank (16a) of a first notch (16) upstream, along said longitudinal axis (X) and with respect to an insertion direction of said dowel in a wall during use, is oriented toward a point of convergence of respective converging arms (16b) of a second notch (16) disposed downstream.

2. Dowel as in claim 1, **characterized in that,** in correspondence with a second end, opposite said first end, the shank (16a) has a widened terminal portion, in particular a circular hole (29).

3. Dowel as in any of the claims hereinbefore, **characterized in that** the arms (16b) of the Y-shaped profile converge to define a V-shape defining a point (18) directed along said longitudinal axis (X), in the insertion direction of said dowel in a wall during use.

4. Dowel as in any of the claims hereinbefore, **characterized in that** the arms (16b) of the Y-shaped profile of said notches (16) each also have a segment substantially parallel to said longitudinal axis (X), in a position opposite said first end.

5. Dowel as in any of the claims hereinbefore, **characterized in that** one or more of said expandable elements (17) are provided with radial ridges (22), in particular developing parallel to said longitudinal axis (X).

6. Dowel as in any of the claims hereinbefore, **characterized in that** each of said notches (16) is defined by a separate and non-communicating profile with respect to the profiles that define the other notches (16).

7. Dowel as in any of the claims hereinbefore, **characterized in that** it comprises at least two linear sequences (116) of said notches (16) which develop linearly, one in a position diametrically opposite the other, in a direction parallel to said longitudinal axis (X).

8. Dowel as in any of the claims hereinbefore, **characterized in that** said anchoring body (11) has a mean thickness (S2), **and in that** said expandable elements (17) have a thickness (S1) bigger than said mean thickness (S2) of said anchoring body (11), so as to define a raised step profile (17a) substantially aligned parallel to said longitudinal axis (X).

## Patentansprüche

1. Expansionsbefestigungsdübel, umfassend einen Verankerungskörper (11) mit einer im Wesentlichen zylindrischen Form und versehen mit einem axialen Hohlraum (14), der sich entlang einer Längsachse (X) erstreckt, wobei der Verankerungskörper (11) eine Mehrzahl von Befestigungselementen (17) umfasst, die radial zur Außenseite des Verankerungskörpers (11) hin expandierbar sind und durch eine entsprechende Mehrzahl von Kerben (16) in Richtung des axialen Hohlraums (14) definiert sind, wobei zumindest einige der Kerben (16) ein im Wesentlichen Y-förmiges Profil aufweisen, wobei die im Wesentlichen Y-Form einen Schaft (16a) und zwei konvergierende Arme (16b) an einem ersten Ende des Schafts (16a) umfasst, wobei der Schaft (16a) im Wesentlichen parallel zur Längsachse (X) verläuft, **dadurch gekennzeichnet, dass** jedes der im Wesentlichen Y-förmigen Profile der Kerben (16) in Bezug auf ein entsprechendes Profil einer Kerbe (16) stromabwärts und einer stromaufwärts entlang der Längsachse (X) in Reihe angeordnet ist, sodass ein Schaft (16a) einer ersten Kerbe (16) stromaufwärts entlang der Längsachse (X) und in Bezug auf eine Einführrichtung des Dübels in eine Wand während der Verwendung zu einem Konvergenzpunkt der jeweiligen konvergierenden Arme (16b) einer zweiten Kerbe (16) zeigt, die stromabwärts angeordnet ist.

2. Dübel nach Anspruch 1, **dadurch gekennzeichnet, dass** der Schaft (16a) an einem zweiten Ende, das dem ersten Ende gegenüberliegt, einen verbreiterten Endabschnitt, insbesondere ein kreisförmiges Loch (29), aufweist.

3. Dübel nach einem der vorstehenden Ansprüche, **dadurch gekennzeichnet, dass** die Arme (16b) des Y-förmigen Profils konvergieren, um eine V-Form zu bilden, die einen Punkt (18) definiert, der entlang der Längsachse (X) in Einführrichtung des Dübels in eine Wand während der Verwendung gerichtet ist.

4. Dübel nach einem der vorstehenden Ansprüche, **dadurch gekennzeichnet, dass** die Arme (16b) des Y-förmigen Profils der Kerben (16) jeweils ebenfalls ein Segment aufweisen, das im Wesentlichen parallel zur Längsachse (X) in einer Position gegenüber dem ersten Ende verläuft.

5. Dübel nach einem der vorstehenden Ansprüche, **dadurch gekennzeichnet, dass** eines oder mehrere der expandierbaren Elemente (17) mit radialen Rippen (22) versehen sind, die sich insbesondere parallel zur Längsachse (X) erstrecken.

6. Dübel nach einem der vorstehenden Ansprüche, **dadurch gekennzeichnet, dass** jede der Kerben (16) durch ein separates und nicht mit den Profilen, die die anderen Kerben (16) definieren, in Verbindung stehendes Profil definiert ist.

7. Dübel nach einem der vorstehenden Ansprüche, **dadurch gekennzeichnet, dass** er mindestens zwei lineare Reihen (116) von Kerben (16) umfasst, die sich linear, eine in einer Position diametral gegenüber der anderen, in einer Richtung parallel zur Längsachse (X) erstrecken.

8. Dübel nach einem der vorstehenden Ansprüche, **dadurch gekennzeichnet, dass** der Verankerungskörper (11) eine mittlere Dicke (S2) aufweist und dass die expandierbaren Elemente (17) eine Dicke (S1) aufweisen, die größer ist als die mittlere Dicke (S2) des Verankerungskörpers (11), so dass ein erhöhtes Stufenprofil (17a) definiert wird, das im Wesentlichen parallel zur Längsachse (X) ausgerichtet ist.

## Revendications

1. Cheville à expansion comprenant un corps d'ancrage (11) de forme sensiblement cylindrique et muni d'une cavité axiale (14) qui s'étend le long d'un axe longitudinal (X), ledit corps d'ancrage (11) comprenant une pluralité d'éléments de fixation (17) radialement expansibles vers l'extérieur dudit corps d'ancrage (11) et définis par une pluralité correspondante d'encoches (16) à travers ladite cavité axiale (14), dans laquelle au moins certaines desdites encoches (16) ont un profil sensiblement en forme de Y, dans lequel ledit profil sensiblement en Y comprend une tige (16a) et deux bras convergents (16b) sur une première extrémité de ladite tige (16a), dans lequel ladite tige (16a) est sensiblement parallèle audit axe longitudinal (X), **caractérisée en ce que** chacun des profils sensiblement en forme de Y desdites encoches (16) est disposé en séquence par rapport à un profil correspondant d'une encoche (16) en aval et d'une encoche en amont le long dudit axe longitudinal (X), de sorte qu'une tige (16a) d'une première encoche (16) en amont, le long dudit axe longitudinal (X) et par rapport à une direction d'insertion dudit goujon dans un mur pendant l'utilisation, est orientée vers un point de convergence des bras convergents respectifs (16b) d'une deuxième encoche (16) disposée en aval.

2. Cheville selon la revendication 1, **caractérisée en ce que**, en correspondance avec une deuxième extrémité, opposée à ladite première extrémité, la tige (16a) présente une partie terminale élargie, en particulier un trou circulaire (29).

3. Cheville telle que décrite dans l'une quelconque des revendications précédentes,
**caractérisée en ce que** les bras (16b) du profil en Y convergent pour définir une forme en V définissant une pointe (18) dirigée le long dudit axe longitudinal (X), dans le sens d'insertion de ladite cheville dans un mur lors de l'utilisation.

4. Cheville telle que décrite dans l'une quelconque des revendications précédentes,
**caractérisée en ce que** les bras (16b) du profil en Y desdites encoches (16) comportent chacun également un segment sensiblement parallèle audit axe longitudinal (X), dans une position opposée à ladite première extrémité.

5. Cheville telle que décrite dans l'une quelconque des revendications précédentes,
**caractérisée en ce qu'**un ou plusieurs desdits éléments expansibles (17) sont pourvus de nervures radiales (22), s'étendant en particulier parallèlement audit axe longitudinal (X).

6. Cheville telle que décrite dans l'une quelconque des revendications précédentes,
**caractérisée en ce que** chacune desdites encoches (16) est définie par un profil séparé et non communicant par rapport aux profils qui définissent les autres encoches (16).

7. Cheville telle que décrite dans l'une quelconque des revendications précédentes,
**caractérisée en ce qu'**elle comprend au moins deux séquences linéaires (116) desdites encoches (16) qui s'étendent linéairement, l'une dans une position diamétralement opposée à l'autre, dans une direction parallèle audit axe longitudinal (X).

8. Cheville telle que décrite dans l'une quelconque des revendications précédentes,
**caractérisée en ce que** ledit corps d'ancrage (11) présente une épaisseur moyenne (S2), et **en ce que** lesdits éléments expansibles (17) présentent une épaisseur (S1) supérieure à ladite épaisseur moyenne (S2) dudit corps d'ancrage (11), de manière à définir un profil en gradins surélevés (17a) sensiblement aligné parallèlement audit axe longitudinal (X).
